(19) Europäisches Patentamt / European Patent Office / Office européen des brevets

(11) **EP 4 365 253 A1**

(12) **EUROPEAN PATENT APPLICATION**
published in accordance with Art. 153(4) EPC

(43) Date of publication:
**08.05.2024 Bulletin 2024/19**

(21) Application number: **22832858.9**

(22) Date of filing: **16.06.2022**

(51) International Patent Classification (IPC):
*C09J 4/04* (2006.01)     *C09J 11/08* (2006.01)
*C08F 220/14* (2006.01)     *C08F 220/18* (2006.01)
*C08K 5/101* (2006.01)     *C08L 33/10* (2006.01)
*C08L 33/12* (2006.01)     *C09K 3/00* (2006.01)

(52) Cooperative Patent Classification (CPC):
**C08F 220/14; C08F 220/18; C08K 5/101;
C08L 33/10; C08L 33/12; C09J 4/00; C09J 11/08;
C09K 3/00**

(86) International application number:
**PCT/JP2022/024212**

(87) International publication number:
**WO 2023/276708 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.07.2021 JP 2021110257
20.08.2021 JP 2021135087**

(71) Applicant: **Asahi Kasei Kabushiki Kaisha
Tokyo 1000006 (JP)**

(72) Inventors:
• **IWATA Akira
Tokyo 100-0006 (JP)**
• **CHIBA Daijiro
Tokyo 100-0006 (JP)**

(74) Representative: **D Young & Co LLP
3 Noble Street
London EC2V 7BQ (GB)**

(54) **THICKENER AND ADHESIVE COMPOSITION**

(57)     An object of the present disclosure is to provide a thickener that can be suitably used as a thickener for adhesives and is excellent in long-term stability when it is used in the application of a thickener for adhesives, particularly when used in cyanoacrylate-based adhesives. A thickener contains a methacrylic resin having an Mw of 85,000 to 1,500,000, wherein $\eta 1$ and $\eta 2$ satisfy $1.0 \leq \eta 2/\eta 1 \leq 5.0$, where $\eta 1$ is a viscosity (Pa·s) of a solution of the methacrylic resin in ethyl cyanoacrylate at 25 °C, and $\eta 2$ is the viscosity (Pa·s) of the solution at 25 °C after cooling when the solution is allowed to stand at 60 °C for 48 hours to cool to 25 °C (where the concentration of the methacrylic resin in the solution is 20 mass%, 10 mass%, or 7 mass%, depending on the Mw of the methacrylic resin).

**EP 4 365 253 A1**

Processed by Luminess, 75001 PARIS (FR)

**Description**

TECHNICAL FIELD

The present disclosure relates to a thickener and an adhesive composition.

BACKGROUND

In the manufacturing of paints, adhesives, or other products, organic thickeners are used to adjust the viscosity of products for the purpose of improving handleability. Among organic thickeners, thickeners including methacrylic resin compositions have a high transparency and a high weather resistance as transparent resins, as well as excellent affinity with an alkyl cyanoacrylate and chemical resistance, etc. Methacrylic resin compositions are widely used as a thickener for adhesives because they dissolve quickly in monomers while maintaining their transparency.

In particular, among adhesives, cyanoacrylate-based adhesives initiate polymerization in the presence of weak anions such as a trace amount of water or impurities due to the high anionic polymerization property of an alkyl cyanoacrylate, which is the main component and can bond various materials firmly with each other in a short time. Therefore, they are used as instant adhesives in a wide range of fields, including industrial, medical, and household applications.

Due to their high polymerizability, cyanoacrylate-based adhesives are transported and stored in environments that are to some extent sealed off from the external air, for example, sealed containers. However, cyanoacrylate-based adhesives are sometimes used under high-temperature and high-humidity conditions depending on transportation, storage, or usage conditions. When cyanoacrylate-based adhesives are subjected to such conditions for a long time, the viscosity of the cyanoacrylate-based adhesives may increase and improvements have been remanded.

In addition, cyanoacrylate-based adhesives sometimes have a peculiar odor caused by a thickener contained in the adhesives, and a reduction in the odor is also demanded.

PTL 1 discloses an acrylic thickener that has a characteristic molecular weight distribution and excellent solubility in methyl methacrylate.

PTL 2 discloses a thickener containing a methacrylic resin with excellent stability when it is subjected to 50 °C / 95% Rh in methyl methacrylate.

PTL 3 discloses the inclusion of a poly alkyl (meth)acrylate having a weight average molecular weight from 200,000 to 500,000 as a thickener in cyanoacrylate-based adhesive compositions.

CITATION LIST

Patent Literature

PTL 1: JP 5131956 B
PTL 2: JP 2018-178076 A
PTL 3: JP H04-15267 A

SUMMARY

(Technical Problem)

PTL 1 does not disclose solubility in an alkyl cyanoacrylate and long-term storage stability upon dissolution into an alkyl cyanoacrylate where polymerization takes place easily under the influence of a trace amount of water or impurities.

PTL 2 discloses that a thickener with excellent long-term stability in methyl methacrylate is achieved by introducing a specific structure at the end of the resin. However, a long-term stability in an alkyl cyanoacrylate is not disclosed.

In PTL 3, a cyanoacrylate-based adhesive is prepared by adding various stabilizers, but the contribution of the acrylic thickener per se to the stabilization is not disclosed.

Accordingly, the present disclosure is directed to provide a thickener that can be suitably used as a thickener for adhesives and that is excellent in long-term stability when it is used as a thickener for adhesives, particularly when it is used as a thickener for cyanoacrylate-based adhesives.

(Solution to Problem)

In order to solve the above problem, the present inventors conducted diligent research and surprisingly discovered that a thickener with excellent long-term storage stability is provided when the rate of change in viscosity after the thickener is dissolved in ethyl cyanoacrylate and allowed to stand at 60 °C for 48 is within a specific range.

Specifically, this disclosure provides the following:

[1] A thickener comprising a methacrylic resin having a weight average molecular weight (Mw) of 85,000 to 1,500,000,

wherein η1 and η2 satisfy the following:

$$1.0 \leq \eta2/\eta1 \leq 5.0$$

where η1 is a viscosity (Pa·s) of a solution of the methacrylic resin in ethyl cyanoacrylate at 25 °C, and
η2 is the viscosity (Pa·s) of the solution at 25 °C after cooling when the solution is allowed to stand at 60 °C for 48 hours to cool to 25 °C,
(where a concentration of the methacrylic resin in the solution is 20 mass% when the Mw of the methacrylic resin is 85,000 or more and less than 300,000,
the concentration of the methacrylic resin in the solution is 10 mass% when the Mw of the methacrylic resin is 300,000 or more and less than 800,000, and
the concentration of the methacrylic resin in the solution is 7 mass% when the Mw of the methacrylic resin is 800,000 or more and 1,500,000 or less).

[2] The thickener according to [1], wherein the methacrylic resin contains 90 to 99.9 mass% of a methyl methacrylate monomer unit and 0.1 to 10 mass% of an alkyl acrylate monomer unit.
[3] The thickener according to [2], wherein a carbon number of an alkyl group in the alkyl acrylate monomer unit is 4 or more.
[4] The thickener according to [1], wherein the methacrylic resin contains 90 to 99.9 mass% of a methyl methacrylate monomer unit and 0.1 to 10 mass% of an aromatic vinyl monomer unit.
[5] The thickener according to [4], wherein the methacrylic resin contains 90 to 99.8 mass% of the methyl methacrylate monomer unit, 0.1 to 8 mass% of the aromatic vinyl monomer unit, and 0.1 to 8 mass% of an acrylic acid ester monomer unit.
[6] The thickener according to [5], wherein a carbon number of an alkyl group in the alkyl acrylate monomer unit is 4 or more.
[7] The thickener according to any one of [1] to [3], wherein the methacrylic resin has a water content measured by the drying method of 0.01% or more and 1% or less.
[8] The thickener according to any one of [1] to [4], wherein the methacrylic resin is in bead form with an average particle diameter of 50 to 500 μm.
[9] The thickener according to [5], wherein a mass ratio of particles having a particle diameter of 710 μm or more with respect to 100 mass% of the thickener is 5 mass% or less.
[10] A cyanoacrylate-based adhesive composition comprising 1 to 30% of the thickener according to any one of [1] to [6].

(Advantageous Effect)

According to the present disclosure, it is possible to provide a thickener that can be suitably used as a thickener for adhesives, and in particular, can suppress an increase in the viscosity and solidification of the product to be thickened during storage, and improve the storage stability of the product, when it is used as a thickener for cyanoacrylate-based adhesives.

DETAILED DESCRIPTION

The following provides a detailed description of an embodiment of the present disclosure (hereinafter, referred to as the "present embodiment"). The present disclosure is not limited to the following embodiment, but may be performed by modifying within the scope of the subject thereof.

In the present embodiment, "methacrylic resin" refer to a resin that contains 80 mass% or more of a methyl methacrylate monomer unit as a monomer unit and has a weight average molecular weight (Mw) of 85,000 to 1,500,000, unless otherwise stated.

[Thickener]

A thickener of the present disclosure includes at least a methacrylic resin. The thickener may only contain a methacrylic resin or may include a methacrylic resin and different resin(s). It is preferable that the resin component in the thickener is only the methacrylic resin. In addition, the thickener may contain one methacrylic resin alone or may contain two or more methacrylic resins in combination. In one example, it is more preferable that the thickener may only contain one methacrylic resin as the resin component.

The thickener can be suitably used as a thickener for adhesives, in particular a thickener for cyanoacrylate-based adhesives.

<Viscosity ratio>

In the present embodiment, $\eta 1$ and $\eta 2$ satisfy $1.0 \leq \eta 2/\eta 1 \leq 5.0$, where $\eta 1$ is the viscosity (Pa·s) of a solution of the methacrylic resin in ethyl cyanoacrylate at 25 °C, and $\eta 2$ is the viscosity (Pa·s) of the solution at 25 °C after cooling when the solution is allowed to stand at 60 °C for 48 hours, and cooled to 25 °C. When $\eta 2/\eta 1$ (hereinafter sometimes simply referred to as "ratio of $\eta$) is 1.0 or more and 5.0 or less, the viscosity and the adhesive performance can be maintained even after the thickener is dissolved in an alkyl cyanoacrylate and allowed to stand for a long time (e.g. several months) at room temperature.

The temperature at which the methacrylic resin is dissolved in ethyl cyanoacrylate is preferably 50 °C or higher. After dissolution of the methacrylic resin, the temperature of the solution is set to 25 °C and the viscosity $\eta 1$ is measured.

After the viscosity $\eta 1$ of the solution at 25 °C is measured, the solution is heated to 60 °C. The solution is then allowed to stand at 60 °C for 48 hours to cool to 25 °C, and the viscosity $\eta 2$ of the solution at 25 °C after cooling is measured. Here, being allowed to stand at 60 °C for 48 hours means that the time elapsed after the solution is placed in an oven at 60 °C is preferably 48 + 1 hours.

Examples of the means to adjust the ratio of $\eta$ to 1.0 or more and 5.0 or less include copolymerizing a certain amount of an alkyl acrylate monomer unit, copolymerizing with a small amount of an aromatic vinyl monomer unit, adjusting the water content of the methacrylic resin, reducing the weight ratio of particles having a diameter of 710 $\mu$m or more, performing acid/alkali washing so that the pH of the aqueous phase when the thickener is dispersed in water is 2 or more and 9 or less, and reducing impurities in the thickener as much as possible. It is preferable that several of the these means are combined.

The ratio of $\eta$ is preferably 1.0 or more and 4.5 or less, more preferably 1.0 or more and 4.0 or less. If the ratio of $\eta$ is less than 1.0, a function as a thickener is not exhibited because the viscosity decreases after dissolution. If the ratio of $\eta$ exceeds 5.0, there is a risk of solidification when the product is stored for a long period of time (e.g., several months) or when the temperature rises during transportation, or inferior strength as an adhesive after solidification.

The concentration of the methacrylic resin in the ethyl cyanoacrylate solution is 20 mass% when the Mw of the methacrylic resin is 85,000 and more and less than 300,000, 10 mass% when the Mw of the methacrylic resin is 300,000 or more and less than 800,000, and 7 mass% when the Mw of the methacrylic resin is 800,000 or more and 1,500,000 or less.

If the ethyl cyanoacrylate solution contains methacrylic resins with different ranges of Mw, the Mw of the entire methacrylic resin may be measured and the above concentration may be determined from the Mw.

(Methacrylic resin)

The methacrylic resin preferably contains 90 to 99.9 mass% of a methyl methacrylate monomer unit and 0.1% to 10 mass% of an alkyl acrylate monomer unit. The methacrylic resin may or may not contain other monomer units other than the methyl methacrylate unit and the alkyl acrylate monomer unit.

The alkyl acrylate monomer unit preferably has an alkyl group with a carbon number of 4 or more. Examples of the alkyl group with a carbon number of 4 or more include monomer units derived from alkyl acrylates having alkyl groups with a carbon number of 4 to 8, such as n-butyl acrylate, sec-butyl acrylate, and 2-ethylhexyl acrylate. From the viewpoint of reducing the odor of a cyanoacrylate solution of the methacrylic resin, the carbon number of the alkyl group of the alkyl acrylate monomer unit is preferably 4 to 8. From the viewpoint of ease of availability and reduction of the odor upon dissolution into a cyanoacrylate, an n-butyl acrylate monomer unit is particularly preferred.

The above methacrylic resin may consist only of the methyl methacrylate monomer unit and the alkyl acrylate monomer unit having an alkyl group with a carbon number of 4 or more, or may further contain other monomer units such as other vinyl monomer units copolymerizable with the methyl methacrylate.

Other vinyl monomers may be vinyl monomers copolymerizable with methyl methacrylate. Example include alkyl methacrylates having an alkyl group with a carbon number of 2 to 18; alkyl acrylates having an alkyl group with a carbon number of 1 to 3; α,β-unsaturated acids such as acrylic acid and methacrylic acid; divalent carboxylic acids containing unsaturated groups such as maleic acid, fumaric acid, and itaconic acid, and alkyl esters thereof; aromatic vinyl compounds such as styrene, α-methylstyrene, styrene having substituents on the benzene ring; cyanated vinyl compounds such as acrylonitrile and methacrylonitrile; maleic anhydride, maleimide, N-substituted maleimide; esterification products obtained by esterifying both end hydroxyl groups of ethylene glycol or an oligomer thereof with an acrylic acid or a methacrylic acid such as ethylene glycol di(meth)acrylate, diethylene glycol di(meth)acrylate, triethylene glycol di(meth)acrylate, and tetraethylene glycol di(meth)acrylate; esterification products obtained by esterifying two alcohol hydroxyl groups with an acrylic or a methacrylic acid, such as neopentyl glycol di(meth)acrylate and di(meth)acrylate; esterification products obtained by esterifying a polyhydric alcohol derivative, such as trimethylolpropane and pentaerythritol; and multifunctional monomers such as divinylbenzene. They can be used alone or in combination of two or more. From the viewpoint of reducing the odor, when an alkyl acrylate having an alkyl group with a carbon number of 1 to 3 is contained, the mass ratio of monomer units derived from alkyl acrylates having an alkyl group with a carbon number of 1 to 3 is less than 0.1 mass% with respect to the total mass of all unit monomer units constituting the methacrylic resin, and it is preferable that such monomer units are absent.

The mass ratio of monomer units derived from methyl methacrylate with respect to 100 mass% of the methacrylic resin is preferably 90 to 99.9 mass% from the viewpoint of reducing the odor upon dissolution (e.g., upon dissolution in an alkyl cyanoacrylate). It is more preferably 95 to 99.8 mass%, even more preferably 97 to 99.8 mass%, and particularly preferably 98 to 99.8 mass%.

The mass ratio of the alkyl acrylate monomer unit with respect to 100 mass% of the methacrylic resin is preferably 0.1 to 10 mass%. It is more preferably 0.2 to 5 mass%, even more preferably 0.2 to 3 mass%, and particularly preferably 0.2 to 2 mass%. If the ratio exceeds 5 mass%, it is undesirable because the remaining alkyl acrylate monomer and impurities derived from it produce a peculiar odor upon dissolution in alkyl cyanoacrylate. A ratio of less than 0.1 mass% is undesirable because the odor-improving effect through copolymerization of the alkyl acrylate monomer unit is not achieved.

In the present embodiment, other monomer units may be copolymerized to the extent that the effect of the present disclosure is not impaired. In consideration of the solubility in a cyanoacrylate, etc., and odor upon dissolution, the mass ratio of other vinyl monomers that can copolymerize with the methyl methacrylate is preferably 0 to 20 parts by mass, more preferably 15 parts by mass or less, even more preferably 10 parts by mass or less, and particularly preferably 5 parts by mass or less, when the sum of the amounts of methyl methacrylate and alkyl acrylate monomer units having an alkyl group with a carbon number of 4 or more is taken to be 100 parts by mass.

In 100 parts by mass of the methacrylic resin, the sum of the mass ratios of monomer units derived from the methyl methacrylate and the alkyl acrylate monomer unit having an alkyl group with a carbon number of 4 or more is preferably 80 parts by mass or more, more preferably 85 parts by mass or more, even more preferably 90 parts by mass or more, even more preferably 95 parts by mass or more, and particularly preferably 100 parts by mass.

From the viewpoint of being able to improve the storage stability of cyanoacrylate-based adhesives, it is preferred that the methacrylic resin contains an aromatic vinyl monomer unit. It is presumed that the mechanism of improvement of the storage stability of cyanoacrylate-based adhesives by the aromatic vinyl monomer unit is accomplished by the weak electron-attracting nature of the aromatic group and the incorporation of monomers with low anionic polymerizability.

The methacrylic resin preferably contains 90 to 99.9 mass% of the methyl methacrylate monomer unit and 0.1 to 10 mass% of the aromatic vinyl monomer unit. In one embodiment, the aromatic vinyl monomer unit is a monomer unit derived from styrene.

In one embodiment, the content of the aromatic vinyl monomer unit is 0.2 mass% or more, 0.3 mass% or more, 0.5 mass% or more, 1.0 mass% or more, 1.5 mass% or more, 2.0 mass% or more, 2.5 mass% or more, 3.0 mass% or more, 3.5 mass% or more, 4.0 mass% or more, 4.5 mass% or more, 5.0 mass% or more, 6.0 mass% or more, 7.0 mass% or more, 8.0 mass% or more, or 9.0 mass% or more, with respect to 100 mass% of the methacrylic resin. In another embodiment, the content of the aromatic vinyl monomer unit is 10.0 mass% or less, 9.0 mass% or less, 8.0 mass% or less, 7.0 mass% or less, 6.0 mass% or less, 5.0 mass% or less, 4.5 mass% or less, 4.0 mass% or less, 3.5 mass% or less, 3.0 mass% or less, 2.5 mass% or less, 2.0 mass% or less, 1.5 mass% or less, 1.0 mass% or less, or 0.5 mass% or less, with respect to 100 mass% of the methacrylic resin. A content exceeding 10 mass% is not desirable because the production efficiency is reduced and the remaining aromatic vinyl monomer may produce a peculiar odor. A content of less than 0.1 mass% is undesirable because the effect of improving the storage stability upon addition as a thickener to cyanoacrylate-based adhesives is not obtained.

In one embodiment, the methacrylic resin contains 90 to 99.9 mass% of the methyl methacrylate monomer unit and 0.1 to 10 mass% in total of one or more selected from the group consisting of alkyl acrylate monomer units and aromatic vinyl monomer units.

<Weight average molecular weight>

The methacrylic resin has a weight average molecular weight measured by gel permeation chromatography (GPC) of 85,000 to 1,500,000. An Mw of less than 85,000 is undesirable because the amount of the thickener used to bring a syrup (solution wherein the methacrylic resin is dissolved) to a predetermined viscosity increases and mechanical properties etc. of the resulting adhesive may be inferior. On the other hand, from the viewpoint of the solubility and the stability of properties, Mw is 1,500,000 or less. The preferred molecular weight depends on the desired viscosity and required properties upon dissolution, but the weight average molecular weight is preferably 85,000 or more and less than 300,000 for use at a relatively low viscosity or for improving the dissolution speed. On the other hand, the it is preferably 300,000 or more and 1,500,000 or less for use at a high viscosity or for achieving a desired viscosity with a small addition amount.

<Water content>

The methacrylic resin preferably has a water content of 0.01% or more and 1% or less. For keeping the water content low, prolonged drying may be required. From the viewpoint of the productivity, the water content is preferably 0.01% or more. On the other hand, if the water content is more than 1%, the storage stability after dissolution into a cyanoacrylate such as ethyl cyanoacrylate tends to reduce. The water content is therefore preferably 1% or less. The water content is more preferably 0.01% or more and 0.8% or less, more preferably 0.02% or more and 0.7% or less, and most preferably more than 0.03% and less than 0.7%. The storage period of the thickener before the thickener is dissolved in an adhesive such as a cyanoacrylate-based adhesive may be long depending on the form of the usage, and the methacrylic resin may absorb moisture in this period. It is therefore desirable to reduce the initial moisture content of the methacrylic resin as much as possible.

The water content can be measured by the method described in the EXAMPLES section below, and is measured by the drying method. The drying method is a method in which a measurement is carried out by keeping 10.0 g of the methacrylic resin at 70 °C and a measurement is terminated when the weight loss for 10 seconds becomes 0.02% or less. The total weight loss is used as the water content.

The water content of the above methacrylic resin (e.g., the methacrylic resin in the form of pellets or beads) can be adjusted by the drying method of slurry after polymerization, for example.

Examples of the method to dry the methacrylic resin include hot air drying in which hot air is sent to a tank by a hot air blower or a blow heater, vacuum drying in which the inside of the system is depressurized and heating is performed as necessary, barrel drying in which the polymerized material is rotated in a container to remove water, spin drying in which centrifugal force is used to dry the polymerized material, airflow drying in which the resin is transferred through a pipe by means of hot air, and a fluidized bed dryer in which the resin is dried at a certain temperature for a certain period of time, the bottom of the tank is opened then and closes to drop the resin into the subsequent drying tank.

To keep the water content in the above range, it is preferable to dry the resultant slurry in an airflow dryer and/or a fluidized bed dryer after the suspension polymerization is completed. In this process, low final water content can result in reduced productivity due to the time required for processing and result in problems such as pump-up failures in the slurry pumping step.

The thickener of the present embodiment can be used in the production of syrups for artificial marble, or can be used in paints, adhesives, and the like.

Particularly, it is preferable that the thickener of the present embodiment is used for cyanoacrylate-based adhesives. Herein, as the cyanoacrylate-based adhesives, cyanoacrylate-based adhesives containing an alkyl cyanoacrylate as the main component (e.g., cyanoacrylate-based adhesives having a mass ratio of the alkyl cyanoacrylate of 50% or more, more preferably 70% or more, with respect to 100 mass% of the adhesive) are preferred.

Examples of the alkyl cyanoacrylate include cyanoacrylates having an alkyl group with a carbon number of 1 to 10, such as methyl cyanoacrylate, ethyl cyanoacrylate, propyl cyanoacrylate, isopropyl cyanoacrylate, butyl cyanoacrylate, isobutyl cyanoacrylate, octyl cyanoacrylate; and methoxyethyl cyanoacrylate and ethoxyethyl cyanoacrylate. Ethyl cyanoacrylate is typically used.

The ratio Mw/Mn of the weight average molecular weight Mw to the number average molecular weight Mn measured by gel permeation chromatography (GPC) of the methacrylic resin is preferably 1.7 or more and 2.5 or less. From the viewpoint of ease of production, the ratio is more preferably 1.8 or more. From the viewpoints of suppressing portions remaining undissolved upon dissolution and improving the solubility, the ratio is preferably less than 2.5, more preferably 2.4 or less, especially preferably 2.3 or less, and particularly preferably less than 2.3.

Note that the weight average molecular weight and the number average molecular weight are measured by GPC. A calibration curve is created with the elution time and the weight average molecular weight using a standard methacrylic resin whose monodisperse weight average molecular weight has been known and which can be obtained as a reagent, and an analytical gel column in which higher molecular weight components are eluted at earlier. From the calibration curve, the molecular weight of each sample can be determined. Specifically, a measurement can be performed by a method described in the EXAMPLES section below.

The shape of the methacrylic resin is not limited, but the methacrylic resin is preferably in the form of pellets, flakes, beads, or powder. The methacrylic resin is preferably in the form of beads or powder from the viewpoint of shortening the dissolution time and reducing undissolved materials.

<Volume average particle diameter>

The methacrylic resin has a volume average particle diameter of preferably 50 to 500 $\mu$m when used in the form of beads. The dissolution time is preferably 450 $\mu$m or less because the dissolution time shortens as the particle diameter decreases, and 50 $\mu$m or more is preferred from the viewpoint of control on the scattering of beads during operation and reducing undissolved materials. The volume average particle diameter is more preferably from 70 to 400 $\mu$m, and most preferably from 100 to 350 $\mu$m.

In this specification, volume average particle diameter refers to a volume particle diameter that can be measured by the method described in the EXAMPLES section below.

The mass ratio of particles having a particle diameter of 710 $\mu$m or more with respect to 100 mass% of the methacrylic resin (preferably methacrylic resin beads) is preferably 5 mass% or less, more preferably 3 mass% or less, even more preferably 1 mass% or less, especially preferably 0.5 mass% or less, and particularly preferably 0.1 mass% or less, from the viewpoint of obtaining high solubility in an alkyl cyanoacrylate and adjusting the ratio of $\eta$. The mass ratio of particles with a particle diameter of 710 $\mu$m or more can be measured by the method described in the EXAMPLES section below, for example. Examples of methods to adjust the mass ratio of particles with a diameter of 710 $\mu$m or more include methods by reducing the particle size of the suspension agent and conducting polymerization under stable condition.

<Polymerization method>

The methacrylic resins can be produced by using monomers constituting the methacrylic resin, a polymerization initiator, a chain transfer agent, a suspension agent, and other additives, for example.

When a free radical polymerization is used, examples of the polymerization initiator used include typical radical polymerization initiators, e.g., peroxide-based polymerization initiators, such as di-t-butyl peroxide, lauryl peroxide, dilauroyl peroxide, t-butylperoxy 2-ethylhexanoate, 1,1-bis(t-butylperoxy)-3,3,5-trimethylcyclohexane, and 1,1-bis(t-butylperoxy)cyclohexane; and azo-based polymerization initiators such as azobisisobutyronitrile, azobisoisovaleronitrile, and 1,1-azobis(1-cyclohexanecabonitrile). One of these may be used alone or two or more of these may be used in combination. A combination of any of these radical initiators and an appropriate reducing agent may be used as a redox-based initiator.

The polymerization initiator is generally used in the range of 0.001 to 1 mass% with respect to 100% of the total mass of monomers.

In the production method of the methacrylic resin, a commonly used chain transfer agent can be used to adjust the molecular weight when the production is carried out by the radical polymerization method.

As the chain transfer agent, for example, mercaptans are preferably used such as n-butyl mercaptan, n-octyl mercaptan, n-dodecyl mercaptan, 2-ethylhexyl thioglycolate, ethylene glycol dithioglycolate, trimethylolpropane trithioglycolate, and pentaerythritol tetrakis(thioglycolate).

The chain transfer agent may be used in an amount in the range of 0.001 to 1 mass% to 100% of the total mass of the monomers. The amount of the chain transfer agent is determined by the desired molecular weight.

Suspension polymerization or emulsion polymerization is preferably used as the polymerization method for the methacrylic resin. Suspension polymerization gives resin beads in particle form while emulsion polymerization gives resin beads in powder form, which is operationally advantageous when dissolving the appropriate amount as a thickener to adjust the syrup to the desired viscosity.

Suspension polymerization is preferred over emulsion polymerization because the polymerization time is shorter.

In particular, when the suspension polymerization method is used, it is preferable that the molecular weight distribution is adjusted so as to fall within the above-mentioned range. When it is required to suppress the generation of undissolved materials upon dissolution in a cyanoalkyl acrylate etc. due to a wide molecular weight distribution and to maintain a high storage stability after dissolution at higher level, it is preferable to obtain the resin by suspension polymerization in a single step rather than in multi-step polymerization. A two-step polymerization is not preferable because the amount of impurities derived from the suspension agent is increased.

As the polymerization method of the methacrylic resin, it is preferable to use a method in which a suspension agent with an average particle diameter of 10 to 40 $\mu$m is dispersed in water. Of these, one-stage suspension polymerization is preferred by dispersing a suspension agent with an average particle diameter of 10 to 40 $\mu$m in water.

In the production method of the above methacrylic resin, it is preferable to carry out polymerization by using the suspension agent with an average particle diameter of 10 to 40 $\mu$m dispersed in suspension polymerization water. This allows the standard deviation of the volume particle diameter of the methacrylic resin (e.g., methacrylic resin beads) to be controlled, stabilizes the polymerization behavior, and lowers the amount of heat removed, thereby improving the productivity.

The average particle diameter of the suspension agent can be adjusted by selecting the particle diameter of the suspension agent to be used. In addition, powders of different particle diameters can be mixed to obtain a suspension agent with the appropriate average particle diameter.

In the production method of the methacrylic resin, the pH of the aqueous phase is preferably adjusted to a range of 4 to 7. By controlling the pH so as to fall within this range, the standard deviation of the particle diameter of the beads can be controlled and the polymerization behavior can be stabilized.

In the production method of the methacrylic resin, the suspension agent is preferably adjusted in advance by raising the temperature to 50 °C to 90 °C and then fed into water (50 °C to 90 °C) in a reactor. This enables adjustments of the average particle diameter of the methacrylic resin (e.g., methacrylic resin beads) and the variation thereof.

Depending on the production method of the methacrylic resin, it is preferable to use an inorganic suspension agent rather than an organic suspension agent. In the case where an organic suspension is used, the variation of the average particle diameter of the beads tends to become too small. Examples of the organic suspension agent include polyvinyl alcohol, methyl cellulose, ethyl cellulose, hydroxypropyl methyl cellulose, carboxymethyl cellulose, gelatin, and polyvinyl acetate.

Examples of the inorganic suspension agent preferably include an inorganic compound containing calcium and/or aluminum in consideration of the stability after dissolution in an alkyl cyanoacrylate. For example, calcium phosphates such as tricalcium phosphate (tricalcium phosphate), calcium carbonate, aluminum hydroxide are exemplified. In particular, from the viewpoint of the stability after dissolution, it is more preferable to include an inorganic compound containing aluminum.

The suspension agent may also contain a suspending aid such as polyethylene glycol, sodium ethylenediamine tetraacetate, and sodium lauryl sulfate. The suspension aid may be contained in the amount of 0.01 to 10 mass% of with respect to 100% mass of the suspension agent.

The suspension agent is preferably mixed with the feedstock monomers in water.

<Washing method>

In the production method of the methacrylic resin, it is preferable to perform acid washing, water washing, alkali washing, and the like to remove the suspension agent. The most suitable number of times to perform such a washing operation is preferably chosen in consideration of the efficiency of the operation and the removal of the suspension agent, and the washing operation may be repeated once or multiple times.

The optimal temperature for washing is preferably selected in consideration of the efficiency to remove the suspension agent and the degree of coloration of the resultant polymer, etc., and is preferably from 20 to 100 °C. It is more preferably from 30 to 95 °C, even more preferably from 40 to 95 °C, and particularly preferably from 50 to 80 °C.

The washing time per wash operation is preferably from 10 to 180 minutes, more preferably from 20 to 150 minutes, in view of the washing efficiency, reduction of the odor upon usage as a thickener, and the dissolution stability in the cyanoacrylate.

The pH of the washing solution used during washing is preferably in the range that allows for removal of the suspension agent, and is preferably pH 1 to 12. When acid washing is performed, the pH is preferably pH 1 to 5 and more preferably pH 1.2 to 4 from the viewpoint of the efficiency of removing the suspension agent and color tone of the resultant polymer. The acid used in this process can be any acid that can remove the suspension agent, and any conventionally known inorganic acid or organic acid can be used without any particular limitation. Examples of acids suitably used include inorganic acids such as hydrochloric acid, nitric acid, sulfuric acid, and phosphoric acid, boric acid, each of which may be used in a dilute solution diluted with water or the like. Examples of organic acids include organic acids having a carboxyl group, a sulfo group, a hydroxy group, a thiol group, or enol. In consideration of the effect of removing the suspension agent and the color tone of the resultant resin, nitric acid, sulfuric acid, and organic acids with a carboxyl group are more preferred.

After acid washing, it is preferable to further perform water washing or alkaline washing from the viewpoint of preventing dissolution residue upon dissolution into a cyanoacrylate. The method to perform washing in hot water at 50 °C or higher is more preferred, and the method to perform washing in hot water at 50 °C or higher followed by further alkaline washing and/or washing in hot water at 50 °C or higher is even more preferred.

By adjusting the pH of the slurry after washing to 2 or more and 9 or less, preferably 4 or more and 7 or less, more preferably 5 or more and 6.8 and or less, and particularly preferably 5.5 or more and 6.5 or less, a thickener which has an excellent storage stability upon dissolution into a cyanoacrylate and has an excellent light resistance can be obtained.

(Additive)

The thickener of the present embodiment may optionally be blended with other additives. No specific limitations are placed on other additives so long as the effects disclosed herein can be exhibited, and such other additives may be selected as appropriate depending on the objective.

Examples of the additives include, but are not limited to: ultraviolet absorbers, thermal stabilizers, and light stabilizers; plasticizers; flame retardants; flame retardant aids; curing agents; curing accelerators; antistatic agents; conductivity imparting agents; stress relievers; mold release agents; crystallization accelerators; hydrolysis inhibitors; lubricants; impact resistance imparting agents; sliding property modifiers; compatibilizers; nucleating agents; reinforcing agents; flow modifiers; dyes; sensitizers; colorants; anti-settling agents; anti-sagging agents; fillers; defoamers; light diffusing particles; anti rust agents; antibacterial agents; antifungal agents; antifouling agents; and conductive polymers.

The methacrylic resin obtained by the method described above may be used as the thickener of the present embodiment as it is, or it may be further mixed with another methacrylic resin composition to prepare a thickener.

The thickener of the present embodiment is particularly suitable for applications of a cyanoacrylate (preferably an alkyl cyanoacrylate, more preferably ethyl cyanoacrylate)-based thickener.

The mass ratio of the methacrylic resin in the thickener is preferably from 80 to 100 mass%, more preferably from 90 to 100 mass%, and particularly from 99 to 100 mass%, with respect to 100% mass of the thickener.

<YI value of acetone solution>

When the thickener is dissolved in acetone at a concentration of 10 mass% and the yellowness index (YI) value is measured in a cell having a thickness of 1 cm, the YI value of the thickener is preferably 0.1 to 2, more preferably 0.2 to 1.9, and even more preferably 0.3 to 1.8.

Furthermore, when the methacrylic resin contained in the thickener is dissolved in acetone at a concentration of 10 mass% and the YI value is measured in a cell having a thickness of 1 cm, the YI value is preferably 0.1 to 2, more preferably 0.2 to 1.9, and even more preferably 0.3 to 1.8.

When the YI value is adjusted so as to fall within the above range, an adhesive with excellent stability after dissolution, hue, and light resistance can be obtained. A method to adjust the YI value so as to fall within the above range is producing the methacrylic resin by one-step polymerization instead of two-step polymerization.

<pH when thickener is dispersed in water>

When 20 g of the thickener and 100 g of pure water are stirred to achieve dispersion and are allowed to stand still to allow the solids to settle, the pH of the aqueous phase of a supernatant liquid measured at room temperature is preferably 2 or more and 9 or less. From the viewpoint of keeping a particularly good hue when the thickener is dissolved and used, the solubility in a cyanoacrylate, and suppression of the odor caused by residues, it is more preferably 3 or more, and particularly preferably 3.5 or more. From the viewpoint of improving the storage stability after dissolution in the cyanoacrylate, etc., the pH is preferably 8.5 or less, more preferably 8 or less, and especially preferably 7.5 or less.

Furthermore, when 20 g of the methacrylic resin contained in the thickener and 100 g of pure water are stirred to achieve dispersion and are allowed to stand still to allow the solids to settle, the pH of the aqueous phase of a supernatant liquid measured at room temperature is preferably 2 or more and 9 or less. From the viewpoint of keeping a particularly good hue when the thickener is dissolved and used, the solubility in a cyanoacrylate, and suppression of the odor caused by residues, it is more preferably 3 or more, and particularly preferably 3.5 or more. From the viewpoint of improving the storage stability after dissolution in the cyanoacrylate, etc., the pH is preferably 8.5 or less, more preferably 8 or less, and especially preferably 7.5 or less.

<Mass ratio of particles having a particle diameter of 710 $\mu$m or more>

From the viewpoint of achieving a high solubility in a cyanoacrylate-based adhesive, the mass ratio of particles having a particle diameter of 710 $\mu$m or more with respect to 100 mass% of the thickener is preferably 5 mass% or less, more preferably 3 mass% or less, even more preferably 1 mass% or less, especially preferably 0.5 mass% or less, and particularly preferably 0.1 mass% or less. The mass ratio of particles with a particle diameter of 710 $\mu$m or more can be measured by the method described in the EXAMPLES section below, for example.

[Adhesive]

The thickening agent of the present embodiment is preferably used for a cyanoacrylate-based adhesive. Here, a cyanoacrylate-based adhesive includes the thickening agent of the present embodiment and a cyanoacrylate (preferably an alkyl cyanoacrylate). It may also contain an additive.

The adhesive preferably has a viscosity of 0.5 to 10 Pa·s at 25 °C. As used herein, this viscosity is the viscosity measured with a B-type viscometer.

The viscosity is more preferably 1 to 9 Pa·s, and even more preferably 2 to 8 Pa·s. Such a range provides an adhesive with excellent handleability. Methods to adjust the viscosity of the adhesive so as to fall within the above range include adjusting the weight average molecular weight of the methacrylic resin and the concentration of the methacrylic resin or the thickener in the adhesive.

A specific concentration is a mass percent concentration of 10 to 30%, preferably at a mass percent concentration of 12 to 28%, even more preferably at a mass percent concentration of 15 to 25%, with respect to 100 mass% of the adhesive, in a cyanoacrylate (preferably an alkyl cyanoacrylate, more preferably ethyl cyanoacrylate).

The temperature upon dissolution is preferably 30 °C or higher from the viewpoint of ease of dissolution, and is 80 °C or lower from the viewpoint of the stability.

EXAMPLES

The following examples and comparative examples will be used to further describe the details.

<Raw materials>

The raw materials used were as follows.

Methyl methacrylate (MMA): manufactured by Asahi Kasei Corp. (which contained 2.5 mass ppm of 2,4-dimethyl-6-t-butylphenol manufactured by Chugai Boyeki as a polymerization inhibitor)
Methyl acrylate (MA): manufactured by Mitsubishi Chemical (which contained 15 ppm of 4-methoxyphenol as a polymerization inhibitor)
Butyl acrylate (BA): manufactured by TOAGOSEI CO., LTD. (which contained 15 mass ppm by mass of 4-methoxyphenol as a polymerization inhibitor)
Styrene (St): manufactured by Asahi Kasei Corporation (which contained 12 ppm of 4-t-butylcatechol as a polymerization inhibitor)
Ethylhexyl acrylate (EHA): manufactured by Tokyo Chemical Industry Co., Ltd.
n-octyl mercaptan (NOM): manufactured by Arkema S. A.
2-Ethylhexyl thioglycolate (EHTG): manufactured by Arkema S. A.
Lauroyl peroxide (LPO): manufactured by NOF CORPORATION
Tertiary calcium phosphate manufactured by Nippon Chemical Industrial CO., LTD.
Calcium carbonate: manufactured by NITTO FUNKA KOGYO K. K., NN #200, average particle diameter 14.8 μm.
Sodium lauryl sulfate: manufactured by FUJIFILM Wako Pure Chemical Corporation, used as a suspension aid
Ethylenediamine tetraacetic acid tetrasodium dihydrate (EDTA): manufactured by Kishida Chemicals Co., Ltd.
Aluminum hydroxide: SBX73, B303, B153, and B103 manufactured by Nippon Light Metal Company, Ltd., the average particle diameter was adjusted by mixing them appropriately

[I. Production of methacrylic resin beads to be used as thickener]

(Example 1)

-Preparation of suspension agent-

A mixed liquid (a1) was prepared by charging 5 kg of water, 130 g of aluminum hydroxide having an average particle diameter of 33 μm, 0.39 g of sodium lauryl sulfate, and 2.3 g of EDTA to a vessel having a stirrer equipped with four pitched-paddle blades, and then mixing these materials under stirring. The average particle diameter of the suspension agent in the mixed liquid (a1) was 33 μm, and the pH of the resultant mixed liquid (a1) was 5.5. The resultant mixed liquid (a1) was heated to 70 °C.

-Polymerization reaction-

Subsequently, 25 kg of water was fed into a 60-L reactor, the temperature was raised to 80 °C, and a monomer solution obtained by blending 3 kg of the mixed liquid (a1), 21 kg of feedstock monomers in the formulation summarized in Table 1, 60 g of EHTG, and 43 g of LPO was charged into the reactor. Suspension polymerization was then carried out while the temperature was maintained to about 80 °C, and an exothermic peak was observed 140 minutes after the monomer solution was fed. The temperature was then increased to 93 °C at a rate of 1 °C/min, and the temperature was maintained to about 93 °C for 45 minutes. The polymerization reaction was substantially terminated to obtain a polymer slurry. The obtained polymerization slurry was then cooled to 50 °C. A 20-mass% sulfuric acid was added to the polymerization reaction solution to dissolve the suspension agent in the polymer slurry. The resultant polymerization reaction solution was then filtered through a 1.68-mm mesh sieve to remove agglomerates, and then filtered to separate the beads-like methacrylic resin particles from the suspension waste solution. The pH of the suspension waste solution was 3.3.

-Washing step-

Then, ion-exchanged water at about 70 °C in a roughly equal amount to the beads-like methacrylic resin particles was added, and stirring, washing, and filtration were carried out. A washing operation with ion-exchanged water at about 70 °C was performed in a similar manner once more (water washing was performed twice in total) to obtain a slurry-like polymer solution. A water solution of sodium hydroxide was added dropwise to the resultant slurry-like polymer solution to adjust the pH to 8.5, and stirring and washing were performed. This slurry-like polymerization solution was filtered, and then stirred after further adding ion-exchanged water at 70 °C to perform washing. The pH of the resultant slurry-like polymer solution was 6.1. Subsequently, the slurry-like polymerization solution was filtered to obtain resin beads. The resultant resin beads were dried under air flow at 150 °C (30 Nm$^3$/hr) using an air flow dryer, and then dried at 90 °C for 5 minutes in a fluidized bed dryer (25 Nm$^3$/hr) to obtain methacrylic resin beads. The weight average molecular weight of the resultant methacrylic resin beads was 142,000, and Mw/Mn = 1.9.

(Example 2)

A suspension agent mixture (a1) was prepared in a manner similar to Example 1. The polymer slurry was then formed in a similar manner to Example 1, except that the formulation of feedstock monomers was changed as summarized in Table 1, and the polymer slurry was filtered to obtain bead-like methacrylic resin particles. Thereafter, washing was performed in a similar manner to Example 1, except that water washing was performed three times to obtain a slurry-like polymer solution. The pH of the resultant slurry-like polymer solution was 6.0. Subsequently, the slurry-like polymerization solution was filtered to obtain resin beads. The resulting resin beads were dried in a similar manner to Example 1 to obtain methacrylic resin beads. The weight average molecular weight of the resultant beads was 136,000, and Mw/Mn = 2.0.

(Example 3 and Example 5)

Methacrylic resin beads were obtained in a similar manner to Example 1, except that the formulation of the feedstock monomers was changed as summarized in Table 1.

(Example 4)

Methacrylic resin beads were obtained by in a manner similar to Example 1, except that the temperature of the airflow dryer was set to 100 °C.

(Comparative Example 1)

Methacrylic resin beads were obtained in a similar manner to Example 1, except that the formulation of the feedstock monomers was changed to MMA only.

(Comparative Example 2) Polymerization example of two-step polymerization

A suspension agent solution (A) was prepared by charging 2 kg of water, 65 g of tricalcium phosphate, 39 g of calcium carbonate, and 0.39 g of sodium lauryl sulfate to a vessel having a stirrer equipped with four pitched-paddle blades. A feedstock monomer (1) was prepared by blending 3900 g of methyl methacrylate, 20 g of butyl acrylate, 42 g of EHTG, and 28 g of LPO. Next, 26 kg of water was added to a 60-L reactor and heated to 80 °C. The entire amount of the suspension agent solution (A) and the feedstock monomer (1) were then added. The suspension polymerization was carried out for 150 minutes while the temperature was maintained at about 80 °C. The reaction was substantially terminated to obtain a slurry of polymer. The slurry of polymer (I) was then stirred at 80 °C for 60 minutes. Next, a feedstock monomer (2) was prepared by blending 20 kg of methyl methacrylate, 100 g of butyl acrylate, 35 g of NOM, and 40 g of LPO. The feedstock monomer (2) was fed into the reactor, and suspension polymerization was continued at about 80 °C for 90 minutes. The temperature was then increased to 92 °C at a rate of 1 °C/min and held for 60 minutes to substantially terminate the polymerization reaction to obtain a polymer slurry.

Subsequently, filtration, washing, and drying were carried out in a similar manner to Example 1 to obtain methacrylic resin beads. The weight average molecular weight of the resultant methacrylic resin beads was 124,000, and Mw/Mn = 2.6.

(Example 6)

The methacrylic resin beads were obtained by performing processing in a similar manner to Example 1, except that the amount of ion-exchanged water was changed to roughly half that of the bead-like polymer and the number of washing cycles was one. The pH of the slurry-like polymer solution after the washing was 4.6.

(Example 7)

The methacrylic resin beads were obtained by performing processing in a similar manner to Example 6, except that the amount of ion-exchanged water was changed to roughly half that of the bead-like polymer and the number of washing cycles was one. The pH of the slurry solution was 3.5.

(Example 8)

The methacrylic resin beads were obtained by performing processing in a similar manner to Example 6, except that washing was carried out using a small amount of 20-mass% sulfuric acid in addition to ion-exchanged water. The pH of the slurry solution was 2.0.

(Comparative Example 3)

The formulation and processing similar to Example 3 were used, and the bead-like methacrylic resin particles and the suspended wastewater were separated from each other. Then, ion-exchanged water at normal temperature in a roughly equal amount to the bead-like methacrylic resin particles was added, and a water solution of sodium hydroxide was then added to adjust the pH to 10.5. The resultant was then stirred, washed, and filtered to obtain resin beads. The resulting resin beads were dried in a similar manner to Example 3 to obtain methacrylic resin beads.

(Example 9)

The formulation and processing similar to Example 1 were used, and the bead-like methacrylic resin particles and the suspended wastewater were separated from each other. The methacrylic resin beads were obtained by performing processing in the same manner as in Comparative Example 3, except that the pH was set to 9.

(Comparative Example 4)

Methacrylic resin beads were obtained by the formulation and the polymerization method similar to those in Example 1, except that the temperature of the airflow dryer was set to 80 °C.

(Example 10)

-Suspension agent-

A mixed liquid (a2) was prepared by charging 5 kg of water, 130 g of aluminum hydroxide having an average particle diameter of 23 μm, 0.39 g of sodium lauryl sulfate, and 2.3 g of EDTA to a vessel having a stirrer equipped with four pitched-paddle blades, and then mixing these materials under stirring. The average particle diameter of the suspension agent in the mixed liquid (a2) was 23 μm, and the pH of the resultant mixed liquid was 5.5. The resultant mixed liquid (a2) was heated to 70 °C. In a 60-L reactor, 27 kg of water, 3 kg of the mixed liquid (a2), 16 kg of feedstock monomers in the formulation ratios summarized in Table 2, 13 g of EHTG, and 25 g of LPO were fed, stirred, and mixed, and the polymerization was carried out for 150 minutes at a temperature in the reactor of 80 °C, followed by a temperature increase to 93 °C at a rate of 1 °C/min. Aging was performed for 45 min. The polymerization reaction was substantially terminated to obtain a polymer slurry. Next, the solution was cooled to 50 °C, and 20 mass% of sulfuric acid was added to dissolve the suspension agent. Then, after the polymerization reaction solution was filtered through a 1.68-mm mesh sieve to remove agglomerates, the resultant suspension was filtered through a filter cloth to separate the beads-like methacrylic resin particles from the suspension waste solution. Then, ion-exchanged water heated to about 70 °C in a roughly equal amount to the beads-like polymer was added, and subsequent operations were performed in a similar manner to Example 1 to obtain resin beads. The weight average molecular weight of the resultant resin beads was 402,000, and Mw/Mn = 2.2.

(Example 11)

Methacrylic resin beads were obtained by the formulation and the polymerization method similar to those in Example 10, except that the amount of EHTG in the feedstock monomers was 8 g. The time until the exothermic peak was observed after the monomers were fed was 120 minutes. The weight average molecular weight of the resultant resin beads was 654,000, and Mw/Mn = 2.2.

(Example 12)

Methacrylic resin beads were obtained by the formulation and the polymerization method similar to those in Example 10, except that the amount of water used was 30 kg and polymerization was performed without adding EHTG. The time until the exothermic peak was observed after the monomers were fed was 100 minutes. The weight average molecular weight of the resultant resin beads was 1,250,000, and Mw/Mn = 2.4.

(Examples 13, 14, 15, and 16)

Methacrylic resin beads were obtained in a similar manner to Example 1, except that the feedstock monomers were changed to the types and formulations summarized in Table 3.

(Comparative Example 5)

A suspension agent solution (A) was prepared by charging 2 kg of water, 65 g of tricalcium phosphate, 39 g of calcium carbonate, and 0.39 g of sodium lauryl sulfate to a vessel having a stirrer equipped with four pitched-paddle blades. Next, 21 kg of water was fed into a 60-L reactor, the temperature was raised to 80 °C, and the suspension agent solution (A), 21 kg of feedstock monomers in the formulation ratios summarized in Table 1, and a formulated solution obtained by blending 60 g of EHTG and 63 g of LPO were added. The suspension polymerization was then carried out for 110 minutes while the temperature was maintained to about 80 °C. The temperature was then increased to 93 °C at a rate of 1 °C/min and maintained to about 93 °C for 45 minutes. The polymerization reaction was substantially terminated to obtain a polymer slurry. The polymerization time was shortened because the amount of LPO as the initiator was increased. Next, the solution was cooled to 50 °C, and 20 mass% of sulfuric acid was added to dissolve the suspension agent. The polymerization reaction solution was then filtered through a filter cloth to separate the beads-like methacrylic resin particles from the suspension waste solution. The pH of the suspension waste solution at that time was 3.3. Then, ion-exchanged water heated to about 70 °C in a roughly equal amount to the beads-like polymer was added, and stirring, washing, and filtration were carried out. A washing operation with ion-exchanged water at about 70 °C was performed in a similar manner once more to obtain a slurry polymer solution (water washing was performed twice in total). A water solution of sodium hydroxide was added dropwise to the resultant slurry-like polymer solution to adjust the pH to 8.5, and stirring and washing were performed. After filtration through a filter cloth and further stirring and washing with ion-exchanged water heated to 70 °C, the resultant slurry polymer solution had a pH of 6.1. Subsequently, the slurry-like polymerization solution was filtered to obtain resin beads. The resultant undried resin beads were dried under air flow at 150 °C (30 Nm$^3$/hr) using an air flow dryer, and then dried at 90 °C for 5 minutes in a fluidized bed dryer (25 Nm$^3$/hr) to obtain methacrylic resin beads. The ratio of particles of 710 $\mu$m or more in the resultant beads was 5.1%.

(Example 17)

-Preparation of suspension agent-

A mixed liquid (a1) was prepared by charging 5 kg of water, 130 g of aluminum hydroxide having an average particle diameter of 33 $\mu$m, 0.39 g of sodium lauryl sulfate, and 2.3 g of EDTA to a vessel having a stirrer equipped with four pitched-paddle blades, and then mixing these materials under stirring. The average particle diameter of the suspension agent in the mixed liquid (a1) was 33 $\mu$m, and the pH of the resultant mixed liquid (a1) was 5.5. The resultant mixed liquid (a1) was heated to 70 °C.

-Polymerization reaction-

Subsequently, 25 kg of water was fed into a 60-L reactor, the temperature was raised to 80 °C, and a monomer solution obtained by blending 3 kg of the mixed liquid (a1), 21 kg of feedstock monomers in the formulation summarized in Table 1, 60 g of EHTG, and 43 g of LPO was charged into the reactor. Suspension polymerization was then carried out while the temperature was maintained to about 80 °C, and an exothermic peak was observed 140 minutes after the monomer solution was fed. The temperature was then increased to 93 °C at a rate of 1 °C/min, and the temperature was maintained to about 93 °C for 45 minutes. The polymerization reaction was substantially terminated to obtain a polymer slurry. The obtained polymerization slurry was then cooled to 50 °C. A 20-mass% sulfuric acid was added to the polymerization reaction solution to dissolve the suspension agent in the polymer slurry. The resultant polymerization reaction solution was then filtered through a 1.68-mm mesh sieve to remove agglomerates, and then filtered to separate the beads-like methacrylic resin particles from the suspension waste solution The pH of the suspension waste solution was 3.3.

-Washing step-

Then, ion-exchanged water at about 70 °C in a roughly equal amount to the beads-like methacrylic resin particles was added, and stirring, washing, and filtration were carried out. A washing operation with ion-exchanged water at about 70 °C was performed in a similar manner once more (water washing was performed twice in total) to obtain a slurry-like polymer solution. A water solution of sodium hydroxide was added dropwise to the resultant slurry-like polymer solution to adjust the pH to 8.5, and stirring and washing were performed. This slurry-like polymerization solution was filtered, and then stirred after further adding ion-exchanged water at 70 °C to perform washing. The pH of the resultant slurry-like polymer solution was 6.1. Subsequently, the slurry-like polymerization solution was filtered to obtain resin beads. The resultant resin beads were dried under air flow at 150 °C (30 Nm$^3$/hr) using an air flow dryer, and then dried at 90 °C for 5 minutes in a fluidized bed dryer (25 Nm$^3$/hr) to obtain methacrylic resin beads. The weight average molecular weight of the resultant methacrylic resin beads was 143,000, and Mw/Mn = 1.9. It was confirmed from an NMR measurement that a methacrylic resin with a composition that matched the feedstock was obtained.

(Examples 18 to 24)

Methacrylic resin beads were obtained in a similar manner to Example 17, except that the formulation of the feedstock monomers was changed as summarized in Table 1.

(Example 25)

-Suspension agent-

A mixed liquid (a2) was prepared by charging 5 kg of water, 130 g of aluminum hydroxide having an average particle diameter of 23 $\mu$m, 0.39 g of sodium lauryl sulfate, and 2.3 g of EDTA to a vessel having a stirrer equipped with four pitched-paddle blades, and then mixing these materials under stirring. The average particle diameter of the suspension agent in the mixed liquid (a2) was 23 $\mu$m, and the pH of the resultant mixed liquid was 5.5. The resultant mixed liquid (a2) was heated to 70 °C. In a 60-L reactor, 27 kg of water, 3 kg of the mixed liquid (a2), 16 kg of feedstock monomers in the formulation ratios summarized in Table 1, 13 g of EHTG, and 25 g of LPO were fed, stirred, and mixed, and the polymerization was carried out for 150 minutes at a temperature in the reactor of 80 °C, followed by a temperature increase to 93 °C at a rate of 1 °C/min. Aging was performed for 45 min. The polymerization reaction was substantially terminated to obtain a polymer slurry. Next, the solution was cooled to 50 °C, and 20 mass% of sulfuric acid was added to dissolve the suspension agent. Then, after the polymerization reaction solution was filtered through a 1.68-mm mesh sieve to remove agglomerates, the resultant suspension was filtered through a filter cloth to separate the beads-like methacrylic resin particles from the suspension waste solution. Then, ion-exchanged water heated to about 70 °C in a roughly equal amount to the beads-like polymer was added, and subsequent operations were performed in a similar manner to Example 17 to obtain methacrylic resin beads. The weight average molecular weight of the resultant methacrylic resin beads was 403,000, and Mw/Mn = 2.3.

(Example 26)

Methacrylic resin beads were obtained by the composition and the polymerization method similar to those in Example 9, except that the amount of EHTG was 8 g. The time until the exothermic peak was observed after the monomers were fed was 120 minutes. The weight average molecular weight of the resultant methacrylic resin beads was 653,000, and Mw/Mn = 2.2.

(Example 27)

Methacrylic resin beads were obtained by the composition and the polymerization method similar to those in Example 9, except that the amount of water used was 30 kg and polymerization was performed without adding EHTG. The time until the exothermic peak was observed after the monomers were fed was 100 minutes. The weight average molecular weight of the resultant methacrylic resin beads was 1,250,000, and Mw/Mn = 2.4.

(Comparative Examples 6 and 7)

Methacrylic resin beads were obtained in a similar manner to Example 17, except that the formulation of the feedstock monomers was changed as summarized in Table 4.

[II. Physical properties of methacrylic resin]

(II-1) (Weight average molecular weight and molecular weight distribution)

The weight average molecular weight and the molecular weight distribution of the methacrylic resin beads obtained in each of the examples and the comparative examples were measured using the following equipment and conditions.
Measurement apparatus: Gel permeation chromatography (HLC-8320GPC) manufactured by Tosoh Corporation
Column: one TSK guard column Super H-H, two TSK gel Super HM-M, and one TSK gel Super H2500 were connected in series in the stated order and used.
In the columns, high molecular weight components elute quickly, and low molecular weight components elute slowly.

Detector: RI (differential refractometer) detector
Detection sensitivity: 3.0 mV/min
Column temperature: 40 °C
Sample: 20 mL of a tetrahydrofuran solution with 0.02 g of the methacrylic resin
Injection amount: 10 mL
Developing solvent: tetrahydrofuran, flow rate: 0.6 mL/min

As an internal standard, 0.1 g/L of 2,6-di-t-butyl-4-methylphenol (BHT) was added.
The following ten kinds of polymethyl methacrylate having known monodisperse peak top molecular weights and different molecular weights (manufactured by Polymer Laboratories; PMMA Calibration Kit M-M-10) were used as standard samples for the calibration curve.

Weight peak molecular weight (Mp)

| | |
|---|---|
| Standard sample 1 | 1,916,000 |
| Standard sample 2 | 625,500 |
| Standard sample 3 | 298,900 |
| Standard sample 4 | 138,600 |
| Standard sample 5 | 60,150 |
| Standard sample 6 | 27,600 |
| Standard sample 7 | 10,290 |
| Standard sample 8 | 5,000 |

(continued)

| Standard sample 9 | 2,810 |
| Standard sample 10 | 850 |

The RI detection intensity relative to the elution time of the methacrylic resin was measured under the conditions listed above.

Based on the area in the GPC elution curve and the calibration curve of the cubic approximate expression, the weight average molecular weight (Mw) and the molecular weight distribution (Mw/Mn) of the methacrylic resin were determined.

(II-2) (Volume average particle diameter and $D_{10}$)

Measurements were conducted under the same conditions as those described in paragraph [0045] of JP 2021-017561 A.

(II-3) (Water content)

A measurement was carried out by keeping 10.0 g of methacrylic resin beads at 70 °C using MOISTURE BALANCE MOC-120H manufactured by Shimadzu Corporation, and the measurement was terminated when the weight loss rate for 10 seconds became 0.02% or less. The total weight loss rate was used as the water content.

(II-4) (MMA volatilization amount)

The MMA volatilization amount was measured using GC-6890 and MSD-5973 manufactured by Agilent. In a pyrolysis furnace, 5 mg of the methacrylic resin beads were heated at 60 °C for 10 minutes, and the gas evolved was trapped in a column HP5-MS cooled with liquid nitrogen. The trapped evolved gas portions were analyzed by GC/MS to quantify the MMA volatilization amount.

(II-5) (YI value of acetone solution)

A solution was prepared by dissolving resultant methacrylic resin beads in acetone at a concentration of 10 mass%, and was placed in a cell with a thickness of 1 cm. The YI value was measured using a color difference meter (TC-8600A produced by Tokyo Denshoku Co., Ltd.; light source: 10-C) in accordance with JIS K7105.

(II-6) (pH of aqueous phase when thickener was dispersed in water)

After 20 g of a methacrylic resin beads and 100 g of pure water were stirred and were allowed to stand still to allow the solids to settle. The pH of the supernatant was then measured at room temperature.

Measurement apparatus: pH meter F-52 (HORIBA, Ltd.)
Electrode: Standard ToupH electrode 9615S-10D

(II-7) (Ratio of particles with particle diameter of 710 $\mu$m or more)

Using sieves (JTS-200-45-31 (aperture size: 710 $\mu$m), JTS-200-45-44 (aperture size: 500 $\mu$m), 35 (aperture size: 355 $\mu$m), 36 (aperture size: 300 $\mu$m), 37 (aperture size: 250 $\mu$m), 38 (aperture size: 150 $\mu$m), and 61 (receptacle), manufactured by Tokyo Screen, Co., Ltd.), about 100 g of methacrylic resin beads were sieved at a maximum vibration force for 10 minutes using TSK B-1 sieve tester. The weight of particles remaining on each sieve was measured. Further, the ratio of particles remaining on the sieve with an aperture of 710 $\mu$m (the ratio of the particles with a particle diameter of 710 $\mu$m or more) was determined. Measurements were carried out three times, and the average value was used to calculate the ratio.

[Ratio of particles with 710 $\mu$m or more] = 100 $\times$ [weight of particles remaining on the sieve with an aperture size of 710 $\mu$m] / [weight of sample measured with the sieve tester] (%)

(II-8) (Viscosity of ethyl cyanoacrylate solution)

Silicone oil was poured into an oil bath equipped with a stirrer, and was heated to 50 °C. In a 110-mL screw-top bottle (50 mm in diameter), 16 g of the thickener, 64 g of ethyl cyanoacrylate (in case of 20 mass% of the thickener) and a rotor, and the lid of the screw-top bottle was closed. The screw-top bottle was placed in an oil bath and the stirrer was rotated (150 rpm) to dissolve the methacrylic resin beads in ethyl cyanoacrylate to obtain a syrup that was a solution of the methacrylic resin in ethyl cyanoacrylate. When the concentration of the thickener was 10 mass%, the resin beads and ethyl cyanoacrylate were dissolved in a ratio of 8 g of the thickener to 72 g of ethyl cyanoacrylate. Thickeners having a weight average molecular weight of 85,000 and more and less than 300,000 were dissolved in ethyl cyanoacrylate at a concentration of 20 mass%, thickeners having a weight average molecular weight of 300,000 or more and less than 800,000 were dissolved at a concentration of 10 mass%, and thickeners having a weight average molecular weight of 300,000 or more and less than 800,000 were dissolved at a concentration of 7 mass%. The viscosity $\eta 1$ was measured after cooling. Furthermore, after the syrup was allowed to stand at 60 °C for 48 hours, the viscosity $\eta 2$ was measured at 25 °C. A B-type viscometer (LVDV Next digital viscometer manufactured by EKO INSTRUMENTS CO., LTD.) was used as a viscosity meter. The syrup solution was measured out in a 40-mL measurement tube, the tube was placed on the viscometer, and a measurement of the viscosity was initiated. The viscosity was measured at a spindle speed of 60 rpm. If the measurement range exceeded at 60 rpm, the rotation speed was reduced to make a measurement. If the viscosity was high, the amount added was adjusted during the preparation of the syrup so that the viscosity was adjusted to an appropriate level.

[III. Evaluation of thickener]

The following evaluations were performed by using the methacrylic resin beads obtained in the examples and the comparative examples as the thickener.

(III-1) (Odor)

In a polyethylene container (sealable type, 500-mL eye boy wide opening bottle), 400 g of the methacrylic resin beads were placed and heated at 60 °C for 2 hours, and then cooled to 30 °C. Five evaluators smelled the odor and scored the odor according to the following criteria. The average of the scores by the five evaluators was determined, and the intensity of the odor was then rated from A to D.

    6: the odor was unbearable
    5: the odor was very irritating to the nose
    4: the odor was irritating to the nose
    3: the odor was perceived as intense but not irritating
    2: the odor was perceivable (slightly) but not irritating
    1: the odor was hardly perceived

This evaluation was done by five evaluators and the average was rated according to the following criteria.

    A (very weak odor): the average score was 2 or less
    B (very weak odor): the average score was more than 2 and 3 or less
    C (good): the average score was more than 3 and 4 or less
    D (poor): the average score was more than 4

(III-2) (Dissolution rate)

Silicone oil was poured into an oil bath equipped with a stirrer, and was heated to 50 °C. In a 110-mL screw-top bottle (50 mm in diameter), 16 g of the thickener, 64 g of ethyl cyanoacrylate (in case of 20 mass% of the thickener) and a rotor, and the lid of the screw-top bottle was closed. The screw-top bottle was placed in the oil bath, and the stirrer was rotated (150 rpm) to start a measurement. The time until the thickener in the bottle dissolved into ethyl cyanoacrylate was measured. Thickeners having a weight average molecular weight of 85,000 and more and less than 300,000 were dissolved in ethyl cyanoacrylate at a concentration of 20 mass%, thickeners having a weight average molecular weight of 300,000 or more and less than 800,000 were dissolved at a concentration of 10 mass%, and thickeners having a weight average molecular weight of 300,000 or more and less than 800,000 were dissolved at a concentration of 7 mass%. The viscosity $\eta 1$ was measured after cooling. The dissolution time was rated from A to D according to the following.

A: the thickener was completely dissolved within 45 minutes
B: the thickener was completely dissolved within 60 minutes
C: the thickener was almost completely dissolved after longer than 60 minutes elapsed
D: the thickener was not dissolved

(III-3) (Long-term stability after dissolution)

Samples were prepared in the same manner as above by dissolving methacrylic resin beads in ethyl cyanoacrylate at 50 °C in concentrations corresponding to their respective molecular weights. The samples were allowed to stand at 25 °C for 90 days and the long-term stability was evaluated according to the following criteria.

A (extremely excellent long-term stability): the sample remained fluid and was usable as an adhesive without any problems
B (excellent long-term stability): the fluidity of the sample slightly decreased, but was still usable as an adhesive without any problems
C (good long-term stability): the fluidity of the sample decreased, but did not solidify and was able to be applied and glue
D (poor long-term stability): the sample solidified

(III-4) (Light resistance)

A portion of the sample dissolved in ethyl cyanoacrylate in the evaluation of the long-term stability was sampled, placed in a 100-mL transparent sealable container, and left outside under direct sunlight for one month. After leaving the sample to stand, the light resistance was evaluated based on the condition of the sample according to the following criteria. Results of A or B indicated acceptable light resistance.

A: the sample remained fluid
B: the fluidity of the sample decreased significantly
C: the sample solidified

[Table 1]

| | | Example 1 | Example 2 | Example 3 | Example 4 | Comp. Ex. 1 | Example 5 | Comp. Ex. 2 |
|---|---|---|---|---|---|---|---|---|
| Formulation | MMA (mass%) | 99.5 | 99.8 | 97.5 | 99.5 | 100 | 94 | 99.5 |
| | BA (mass%) | 0.5 | 0.2 | 2.5 | 0.5 | 0 | 6 | 0.5 |

(continued)

| | | | Example 1 | Example 2 | Example 3 | Example 4 | Comp. Ex. 1 | Example 5 | Comp. Ex. 2 |
|---|---|---|---|---|---|---|---|---|---|
| Physical properties | (II-1) | Mw($\times 10^4$) | 14.2 | 13.6 | 14.2 | 14.7 | 150 | 15.2 | 12.4 |
| | | Mw/Mn | 1.9 | 2.0 | 2.0 | 1.9 | 1.8 | 1.9 | 2.6 |
| | (II-2) | Volume average particle diameter ($\mu$m) | 320 | 312 | 352 | 343 | 343 | 330 | 203 |
| | | $D_{10}$ ($\mu$m) | 198 | 194 | 201 | 198 | 191 | 191 | 92 |
| | (II-3) | Water content (%) | 0.3 | 0.3 | 0.3 | 0.8 | 0.3 | 0.3 | 0.3 |
| | (II-4) | MMA volatilation amount (ppm) | 0.5 | 0.8 | 0.2 | 1.5 | 1.2 | 0.2 | 0.5 |
| | (II-5) | YI of acetone solution | 1.6 | 1.6 | 1.7 | 1.6 | 1.7 | 1.6 | 2.5 |
| | (II-6) | pH of aqueous phase upon dispersion | 6.2 | 6.1 | 6.2 | 6.2 | 6.2 | 6.3 | 6.5 |
| | (II-7) | Ratio of particles with 710 $\mu$m or more | 0 | 0 | 0.1 | 0 | 0 | 0 | 0.2 |
| | (II-8) | $\eta 1$ (Pa.s) | 2.8 | 1.5 | 2.8 | 5.1 | 5.8 | 6.2 | 2.1 |
| | | $\eta 2$ (Pa.s) | 3.4 | 2.2 | 3.4 | 13.3 | 43 | 10.4 | 11.4 |
| | | $\eta 2/\eta 1$ | 1.2 | 1.5 | 1.2 | 2.6 | 7.4 | 1.7 | 5.4 |
| Evaluations | (III-1) | Odor | A | A | B | C | D | D | A |
| | (III-2) | Dissolution rate | A | A | A | A | A | A | C |
| | (III-3) | Long-term stability after dissolution | A | A | A | C | D | B | D |
| | (III-4) | Light resistance | A | A | A | A | A | A | B |

[Table 2]

| | | | Example 6 | Comp. Ex.3 | Example 7 | Example 8 | Example 9 | Comp. Ex. 4 | Example 10 | Example 11 | Example 12 |
|---|---|---|---|---|---|---|---|---|---|---|---|
| Formulation | | MMA (mass%) | 99.5 | 97.5 | 99.5 | 99.5 | 99.5 | 99.5 | 99.5 | 99.5 | 99.5 |
| | | BA (mass%) | 0.5 | 2.5 | 0.5 | 0.5 | 0.5 | 0.5 | 0.5 | 0.5 | 0.5 |
| Physical properties | (II-1) | Mw ($\times 10^4$) | 15.0 | 14.6 | 14.5 | 13.6 | 14.2 | 14.7 | 40.2 | 65.4 | 125 |
| | | Mw/Mn | 2.0 | 1.9 | 2.0 | 2.0 | 1.9 | 1.8 | 2.2 | 2.2 | 2.4 |
| | (II-2) | Volume average particle diameter ($\mu$m) | 323 | 321 | 352 | 343 | 343 | 330 | 323 | 245 | 198 |
| | | $D_{10}$ ($\mu$m) | 187 | 188 | 194 | 201 | 198 | 191 | 201 | 105 | 90 |
| | (II-3) | Water content (%) | 0.3 | 0.3 | 0.3 | 0.3 | 0.3 | 1.3 | 0.3 | 0.3 | 0.3 |
| | (II-4) | MMA volatilation amount (ppm) | 0.2 | 0.4 | 0.5 | 0.8 | 0.2 | 1.7 | 0.4 | 0.4 | 0.5 |
| | (II-5) | YI of acetone solution | 2.6 | 1.6 | 1.6 | 1.7 | 1.6 | 1.7 | 1.6 | 1.6 | 1.6 |
| | (II-6) | pH of aqueous phase upon dispersion | 4.3 | 9.8 | 3.5 | 2.1 | 8.2 | 6.2 | 6.5 | 6.5 | 6.7 |
| | (II-7) | Ratio of particles with 710 $\mu$m or more | 0 | 0 | 0 | 0 | 0 | 0 | 0.2 | 0.4 | 2.6 |
| | (II-8) | $\eta$1 (Pa.s) | 5.7 | 3.3 | 2.8 | 1.5 | 2.8 | 5.1 | 0.7 | 3.5 | 5.4 |
| | | $\eta$2 (Pa.s) | 6.7 | 69 | 3.1 | 1.6 | 12.1 | 76 | 1.6 | 6.7 | 6.3 |
| | | $\eta$2/$\eta$1 | 1.2 | 13.0 | 1.1 | 1.1 | 4.3 | 14.9 | 2.3 | 1.9 | 1.2 |
| Evaluations | (III-1) | Odor | A | A | A | A | A | D | A | A | A |
| | (III-2) | Dissolution rate | A | A | A | A | A | A | A | A | C |
| | (III-3) | Long-term stability after dissolution | B | D | B | B | C | D | A | A | A |
| | (III-4) | Light resistance | A | C | B | B | B | C | A | A | A |

[Table 3]

| | | | Example 13 | Example 14 | Example 15 | Comp. Ex. 5 | Example 16 |
|---|---|---|---|---|---|---|---|
| Formulation | | MMA (mass%) | 99.5 | 99.5 | 97 | 99.5 | 94 |
| | | EHA (mass%) | 0.5 | 0 | 0 | 0 | 0 |
| | | MA (mass%) | 0 | 0.5 | 3 | 0.5 | 6 |
| Physical properties | (II-1) | Mw ($\times 10^4$) | 14 | 14.5 | 14.2 | 14.2 | 14.1 |
| | | Mw/Mn | 1.9 | 2.0 | 1.9 | 2.1 | 1.9 |
| | (II-2) | Volume average particle diameter ($\mu$m) | 342 | 345 | 365 | 370 | 345 |
| | | $D_{10}$ ($\mu$m) | 198 | 191 | 201 | 204 | 201 |
| | (II-3) | Water content (%) | 0.3 | 0.3 | 0.3 | 0.3 | 0.3 |
| | (II-4) | MMA volatilation amount (ppm) | 0.5 | 0.4 | 0.3 | 0.4 | 0.4 |
| | (II-5) | YI of acetone solution | 1.6 | 1.7 | 1.6 | 1.7 | 1.7 |
| | (II-6) | pH of aqueous phase upon dispersion | 6.2 | 6.1 | 6.2 | 6.1 | 6.2 |
| | (II-7) | Ratio of particles with 710 $\mu$m or more | 0 | 0 | 0.6 | 5.1 | 0 |
| | (II-8) | $\eta 1$ (Pa·s) | 3.0 | 4.6 | 2.8 | 4.5 | 3.2 |
| | | $\eta 2$ (Pa·s) | 3.4 | 5.4 | 3.4 | 23.1 | 4.2 |
| | | $\eta 2/\eta 1$ | 1.1 | 1.2 | 1.2 | 5.1 | 1.3 |
| Evaluations | (III-1) | Odor | B | D | D | D | D |
| | (III-2) | Dissolution rate | A | A | A | D | A |
| | (III-3) | Long-term stability after dissolution | A | B | A | D | A |
| | (III-4) | Light resistance | A | B | A | C | A |

[Table 4]

| | | | Example 17 | Example 18 | Example 19 | Example 20 | Example 21 | Example 22 | Example 23 | Example 24 | Example 25 | Example 26 | Example 27 | Comp. Ex. 6 | Comp. Ex. 7 |
|---|---|---|---|---|---|---|---|---|---|---|---|---|---|---|---|
| Formulation | | MMA (mass%) | 98.5 | 97.5 | 96.5 | 91.5 | 98 | 96 | 94 | 90 | 97.5 | 97.5 | 97.5 | 100 | 88.5 |
| | | BA (mass%) | 0.5 | 0.5 | 0.5 | 0.5 | 0 | 0 | 6 | 9 | 0.5 | 0.5 | 0.5 | 0 | 0.5 |
| | | MA (mass%) | 0 | 0 | 0 | 0 | 0 | 2 | 0 | 0 | 0 | 0 | 0 | 0 | 0 |
| | | St (mass%) | 1 | 2 | 3 | 8 | 2 | 2 | 2 | 1 | 2 | 2 | 2 | 0 | 11 |
| Physical properties | (II-1) | Mw ($\times 10^4$) | 14.3 | 14.1 | 14.6 | 15.1 | 15.3 | 14.8 | 15.2 | 15.3 | 40.3 | 65.3 | 125 | 15.2 | 14.6 |
| | | Mw/Mn | 1.9 | 2.0 | 1.9 | 1.9 | 2 | 1.9 | 1.9 | 1.9 | 2.3 | 2.2 | 2.4 | 1.9 | 1.9 |
| | (II-2) | Volume average particle diameter ($\mu$m) | 333 | 322 | 343 | 356 | 365 | 328 | 330 | 331 | 333 | 244 | 198 | 345 | 356 |
| | (II-4) | MMA volatilation amount (ppm) | 0.6 | 0.4 | 0.3 | 0.7 | 0.5 | 0.4 | 0.2 | 0.2 | 0.2 | 0.3 | 0.3 | 1.5 | 0.7 |
| | (II-8) | η1 (Pa·s) | 2.5 | 2.3 | 2.8 | 4.5 | 4.6 | 4.8 | 6.2 | 6.4 | 0.3 | 3.7 | 5.4 | 4.3 | 3.5 |
| | | η2 (Pa·s) | 3.4 | 2.4 | 3.4 | 13.3 | 7.8 | 5.6 | 10.4 | 10.2 | 1.4 | 7.8 | 6.3 | 43 | 192 |
| | | η2/η1 | 1.4 | 1.0 | 1.2 | 3.0 | 1.7 | 1.2 | 1.7 | 1.6 | 1.8 | 2.1 | 1.2 | 10.0 | 5.5 |
| Evaluations | (III-1) | Odor | A | A | B | C | C | D | C | D | A | A | A | D | C |
| | (III-2) | Dissolution rate | A | A | A | A | A | A | A | A | A | A | C | A | A |
| | (III-3) | Storage stability after dissolution | A | A | A | B | B | A | B | B | A | A | A | D | D |
| | (III-4) | Light resistance | A | A | A | B | A | A | A | A | A | A | A | A | C |

EP 4 365 253 A1

22

It can be observed that in comparisons of Example 1 with Comparative Example 1 and Example 8 with Comparative Examples 2 and 3, the lower values of the ratio of η gave excellent stability after dissolution. It can be observed that in a comparison of Example 1 with Example 4, the lower values of the ratio of η gave excellent stability after dissolution and the inclusion of a predetermined amount of an alkyl acrylate monomer having alkyl groups with carbon number 4 or more reduced the odor after dissolution in cyanoacrylate.

INDUSTRIAL APPLICABILITY

According to the present disclosure, it is possible to provide a thickener that can be suitably used as a thickener for adhesives, and in particular, can suppress an increase in the viscosity and solidification of the product to be thickened during storage, and improve the storage stability of the product, when it is used as a thickener for cyanoacrylate-based adhesives.

**Claims**

1. A thickener comprising a methacrylic resin having a weight average molecular weight (Mw) of 85,000 to 1,500,000,

   wherein $\eta 1$ and $\eta 2$ satisfy the following:

   $$1.0 \leq \eta 2/\eta 1 \leq 5.0$$

   where $\eta 1$ is a viscosity (Pa·s) of a solution of the methacrylic resin in ethyl cyanoacrylate at 25 °C, and $\eta 2$ is the viscosity (Pa·s) of the solution at 25 °C after cooling when the solution is allowed to stand at 60 °C for 48 hours to cool to 25 °C,
   (where a concentration of the methacrylic resin in the solution is 20 mass% when the Mw of the methacrylic resin is 85,000 or more and less than 300,000,
   the concentration of the methacrylic resin in the solution is 10 mass% when the Mw of the methacrylic resin is 300,000 or more and less than 800,000, and
   the concentration of the methacrylic resin in the solution is 7 mass% when the Mw of the methacrylic resin is 800,000 or more and 1,500,000 or less).

2. The thickener according to claim 1, wherein the methacrylic resin contains 90 to 99.9 mass% of a methyl methacrylate monomer unit and 0.1 to 10 mass% of an alkyl acrylate monomer unit.

3. The thickener according to claim 2, wherein a carbon number of an alkyl group in the alkyl acrylate monomer unit is 4 or more.

4. The thickener according to claim 1, wherein the methacrylic resin contains 90 to 99.9 mass% of a methyl methacrylate monomer unit and 0.1 to 10 mass% of an aromatic vinyl monomer unit.

5. The thickener according to claim 4, wherein the methacrylic resin contains 90 to 99.8 mass% of the methyl methacrylate monomer unit, 0.1 to 8 mass% of the aromatic vinyl monomer unit, and 0.1 to 8 mass% of an acrylic acid ester monomer unit.

6. The thickener according to claim 5, wherein a carbon number of an alkyl group in the alkyl acrylate monomer unit is 4 or more.

7. The thickener according to claim 1 or 2, wherein the methacrylic resin has a water content measured by the drying method of 0.01% or more and 1% or less.

8. The thickener according to claim 1, wherein the methacrylic resin is in bead form with an average particle diameter of 50 to 500 $\mu$m.

9. The thickener according to claim 8, wherein a mass ratio of particles having a particle diameter of 710 $\mu$m or more with respect to 100 mass% of the thickener is 5 mass% or less.

**10.** A cyanoacrylate-based adhesive composition comprising 1 to 30% of the thickener according to claim 1.

## INTERNATIONAL SEARCH REPORT

| International application No. |
|---|
| **PCT/JP2022/024212** |

### A. CLASSIFICATION OF SUBJECT MATTER

*C09J 4/04*(2006.01)i; *C09J 11/08*(2006.01)i; *C08F 220/14*(2006.01)i; *C08F 220/18*(2006.01)i; *C08K 5/101*(2006.01)i; *C08L 33/10*(2006.01)i; *C08L 33/12*(2006.01)i; *C09K 3/00*(2006.01)i
FI:    C09K3/00 103G; C08F220/14; C08L33/12; C09J4/04; C09J11/08; C08L33/10; C08F220/18; C08K5/101

According to International Patent Classification (IPC) or to both national classification and IPC

### B. FIELDS SEARCHED

Minimum documentation searched (classification system followed by classification symbols)

C09J4/04; C09J11/08; C08F220/14; C08F220/18; C08K5/101; C08L33/10; C08L33/12; C09K3/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2020-12060 A (TOAGOSEI CO LTD) 23 January 2020 (2020-01-23)<br>claim 5, paragraphs [0006], [0028], examples 1-6, table 1 | 1-10 |
| X | JP 2002-201436 A (TAOKA CHEMICAL CO LTD) 19 July 2002 (2002-07-19)<br>claim 4, paragraphs [0011], [0023], examples 1-13, tables 1-5 | 1-10 |
| X | JP 2-6576 A (TAOKA CHEMICAL CO LTD) 10 January 1990 (1990-01-10)<br>claim 1, p. 2, lower right column, examples 1-3, 5-7, 9, 11-12, 14-15, 17, table 1 | 1-10 |
| A | JP 2003-507494 A (CLOSURE MEDICAL CORPORATION) 25 February 2003 (2003-02-25)<br>claims | 1-10 |

☐ Further documents are listed in the continuation of Box C.    ☑ See patent family annex.

| | |
|---|---|
| *     Special categories of cited documents: | "T"    later document published after the international filing date or priority date and not in conflict with the application but cited to understand the principle or theory underlying the invention |
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **12 August 2022** | **30 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<table>
<tr><td colspan="2" align="center">INTERNATIONAL SEARCH REPORT<br>Information on patent family members</td><td colspan="2">International application No.<br>**PCT/JP2022/024212**</td></tr>
</table>

| Patent document cited in search report | Publication date (day/month/year) | Patent family member(s) | Publication date (day/month/year) |
|---|---|---|---|
| JP 2020-12060 A | 23 January 2020 | (Family: none) | |
| JP 2002-201436 A | 19 July 2002 | US 2004/0059030 A1<br>claim 7, paragraphs [0012], [0036], examples 1-13, tables 1-5<br>WO 2002/055621 A2<br>EP 1465958 A2<br>TW 287038 B<br>KR 10-0827264 B1 | |
| JP 2-6576 A | 10 January 1990 | (Family: none) | |
| JP 2003-507494 A | 25 February 2003 | US 2002/0065336 A1<br>claims<br>WO 2001/012243 A1<br>EP 1206291 A1<br>AU 6637800 A<br>BR 13267 A<br>CA 2380916 A1<br>AT 306288 T<br>CN 1378463 A<br>MX PA02001507 A | |

Form PCT/ISA/210 (patent family annex) (January 2015)

**EP 4 365 253 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5131956 B
- JP 2018178076 A
- JP H0415267 A
- JP 2021017561 A